# EUROPEAN PATENT SPECIFICATION

(11) **EP 1 757 843 B1**
(45) Date of publication and mention of the grant of the patent: **12.09.2012**
(21) Application number: 06020232.2
(22) Date of filing: 21.10.2004
(51) Int. Cl.: F16H 57/02

(54) **Transmission gearbox cover**
Abdeckung für Getriebe
Couvercle pour une boîte de vitesses

(43) Date of publication of application: 28.02.2007
(62) Divisional of application: 04025086.2
(73) Proprietor: Kwang Yang Motor Co., Ltd., San-Min Dist., Kaohsiung City (TW)
(72) Inventor: Ho, Chao-Chang, Fongshan City Kaohsiung County (TW)
(74) Representative: Karakatsanis, Georgios

(56) References cited:
- EP-A- 0 135 156
- DE-C1- 4 440 742
- JP-A- 6 125 067
- JP-A- 2002 070 994
- US-A- 4 719 819
- US-A1- 2004 060 758

## Description

### BACKGROUND OF THE INVENTION

### 1. Field of the Invention

The present invention relates to a transmission gearbox cover, and more particularly to an improved structure of transmission gearbox cover for use in a motor vehicle as to eliminate the problem of difficulty in adjusting the presence of a backlash of the transmission bevel gear in the prior art and achieve the purposes of easy maintenance and assembly.

### 2. Description of Related Art

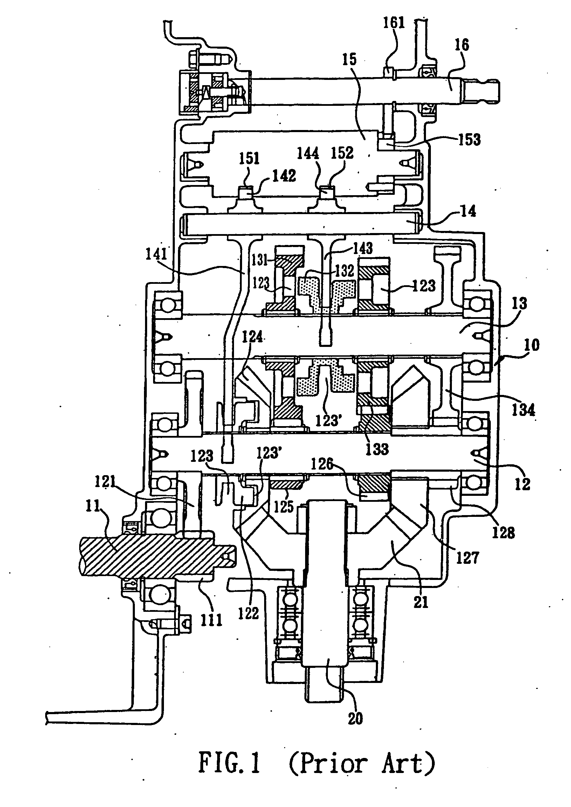

FIG. 1 shows a transmission gearbox for use in a motor vehicle according to the prior art. According to this design, the transmission gearbox **10** comprises a driven shaft **11** adapted to receive the driving force of the engine through a belt transmission mechanism (not shown), a transmission gear **111**, and a linking shaft **12** adjacent to the driven shaft **11**. The linking shaft **12** has mounted thereon in proper order a first gear **121**, a back sliding block **122**, a back bevel gear **124**, a second gear **125**, a third gear **126**, a forward bevel gear **127**, and a fourth gear **128**. The first gear **121** is meshed with the transmission gear **111**. The back sliding block **122** and the back bevel gear **124** each have a coupling hole **123** or **123**'. The back sliding block **122** has a toothed portion (not shown) meshed with the linking shaft **12** such that the back bevel gear **124** and the forward bevel gear **127** and the fourth gear **128** run idle during rotation of the linking shaft **12**.

Further, a main shaft **13** is provided at the other side of the linking shaft **12**. The main shaft **13** has mounted thereon in proper order a low-range gear **131**, a corresponding sliding block **132**, a forward gear **133**, and a transmission gear **134**. The low-range gear **131**, the sliding block **132** and the forward gear **133** each have a coupling hole **123** or **123**'. The sliding block **132** has a toothed portion (not shown) meshed with the main shaft **13** such that the second gear **125** at the linking shaft **12** meshes with the forward gear **133** at the main shaft for synchronous rotation and the low-range gear **131** and the forward gear **133** run idle on the main shaft **13** before connection of the sliding block **132** to the coupling hole **123** of the forward gear **133.**

Further, a first push rod **141** and a second push rod **142** are respectively fastened to the coupling hole **123** of the back sliding block **122** and the coupling hole **123**' of the sliding block **132.** The first push rod **141** and the second push rod **142** are respectively mounted on a shaft **14**, each having the other end terminating into a respective tip **142** or **144** that is respectively inserted into a respective sliding groove **151** or **152** at a gearshift hub **15** for moving a gearshift lever **16** into the desired gearshift position.

Further, the forward bevel gear **127** at the linking shaft **12** is meshed with a transmission bevel gear **21** at the output shaft **20**.

When shifting the gearshift lever **16** to the back gearshift position, the drive gear **161** at the gearshift lever **16** moves a driven gear **153** at the gearshift hub **15**. At this time, the first push rod **141** pushes the back sliding block **122** into the coupling hole **123**' of the back bevel gear **124**, for enabling the driving force to be transferred from the transmission gear **111** at the driven shaft **11** to the linking shaft **12**. Because the back bevel gear **124** is sleeved onto the linking shaft **12**, rotating the linking shaft **12** does not cause the back bevel gear **124** to rotate. At this time, the back sliding block **122** drives the linking shaft **12** to rotate, and therefore the engine driving force is transferred through the back bevel gear **124** to the transmission bevel gear **21** and the output shaft **20** and then to the rear wheels of the motor vehicle for backward movement.

According to this design, the transmission bevel gear **21** at the output shaft **20** is adapted to mesh with the back bevel gear **124** and the forward bevel gear **127**. During gear transmission between the transmission bevel gear **21** and the back bevel gear **124**/forward bevel gear **127**, a noise is produced due to the presence of a backlash. Further, the processing precision requirement of these bevel gears is critical. Loose engagement between the transmission bevel gear **21** and the back bevel gear **124**/forward bevel gear **127** produces a high noise during transmission.

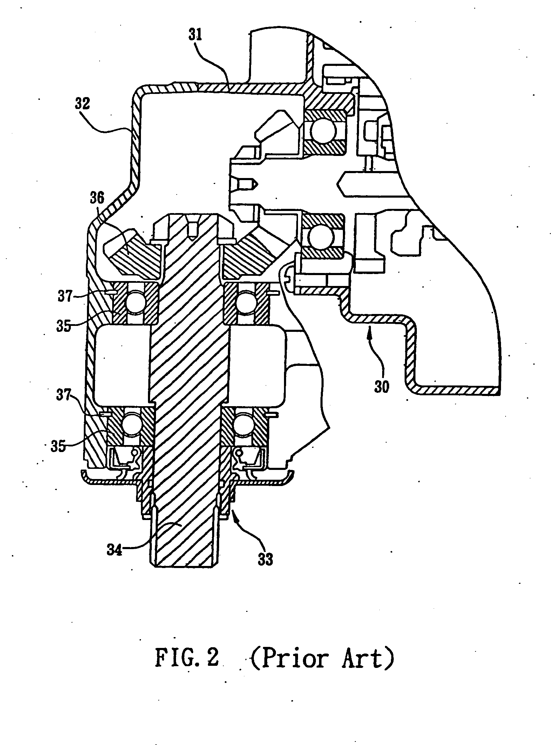

FIG. 2 shows another structure of transmission gearbox according to the prior art. According to this design, the transmission gearbox **30** comprises a gearbox body **31** and a gearbox cover **32**. The gearbox body **31** and the gearbox cover **32** define a space for accommodating an output shaft set **33**, which is comprised of an output shaft **34**, a bearing **35,** and a transmission bevel gear **36**. A C-shaped clamp **37** is installed in the transmission gearbox to secure the bearing **35** to the inside of the transmission gearbox between the gearbox body **31** and the gearbox cover **32**. The positioning precision of the C-shaped clamp **37** is also critical. If the C-shaped clamp **37** is not accurately installed in position between the gearbox body **31** and the gearbox cover **32**, a big backlash will be produced at the transmission bevel gear **36**, thereby resulting in a high noise during transmission operation of the transmission gearbox.

The document JP 61-25067 shows the features of the preamble of claim 1.

### SUMMARY OF THE INVENTION

The present invention has been accomplished under the circumstances in view. It is therefore the main object of the present invention to provide a transmission gearbox cover, which eliminates the drawbacks of the aforesaid prior art designs. According to the present invention, the transmission gearbox cover of a transmission gearbox covering the gearbox body defines therein a receiving chamber, which accommodates the output shaft of the transmission gearbox, which has a driven bevel gear fixedly mounted thereon and meshed with the drive bevel gear. Further, the gearbox cover has a detachable lid for easy access to the drive bevel gear at the linking shaft of the transmission gearbox. Further, the gearbox has a mounting hole disposed in communication with the receiving chamber and accommodating an actuation rod, which has a first end, a worm fixedly mounted on the first end and meshed with a toothed portion at one end of the linking shaft, and a second end connected to a mileage counter through a cable for driving the mileage counter to count upon rotary motion of the actuation rod with the linking shaft.

The invention achieves the following advantages:
1. The invention eliminates the noise problem due to the presence of a backlash between the transmission bevel gear and the back bevel gear/forward bevel gear as encountered in the prior art design.
*2.* By *means of detaching the detachable lid disposed on the gearbox* cover, *a maintenance engineer is able to easily access to the space accommodating the driving* bevel *gear at the linking shaft and the driven bevel gear at the output shaft for maintenance.*
3. The gearbox cover defines therein a receiving chamber for quick installation of the output shaft with a screw. Because the installation of the output shaft according to the present invention eliminates the use of a C-shaped clamp, the installation procedure of the output shaft is simple, saving much labor and installation time.
4. The gearbox has a mounting hole disposed in communication with the receiving chamber for accommodating an actuation rod for rotating a mileage counter cable to drive a mileage counter to start counting upon rotary motion of the linking shaft.

The above and other objects, features and advantages of the present invention will become apparent from the following detailed description taken in conjunction with the accompanying drawings.

### BRIEF DESCRIPTION OF THE DRAWINGS

FIG. 1 is a schematic drawing of a transmission gearbox according to the prior art, showing the gearshift lever shifted to the back gearshift position.
FIG. 2 is a schematic drawing of a part of another structure of transmission gearbox according to the prior art.
FIG. 3 is a schematic drawing of a transmission gearbox having a cover according to the present invention, showing the gearshift lever shifted to the forward gearshift position.
FIG. 4 is similar to FIG. 3 but showing the gearshift lever shifted to the back gearshift position.
FIG. 5 is similar to FIG. 3 but showing the gearshift lever shifted to the low-range gearshift position.
FIG. 6 is a schematic drawing of the present invention, showing the output shaft set separated from the transmission gearbox.

### DETAILED DESCRIPTION OF THE PREFERRED EMBODIMENT

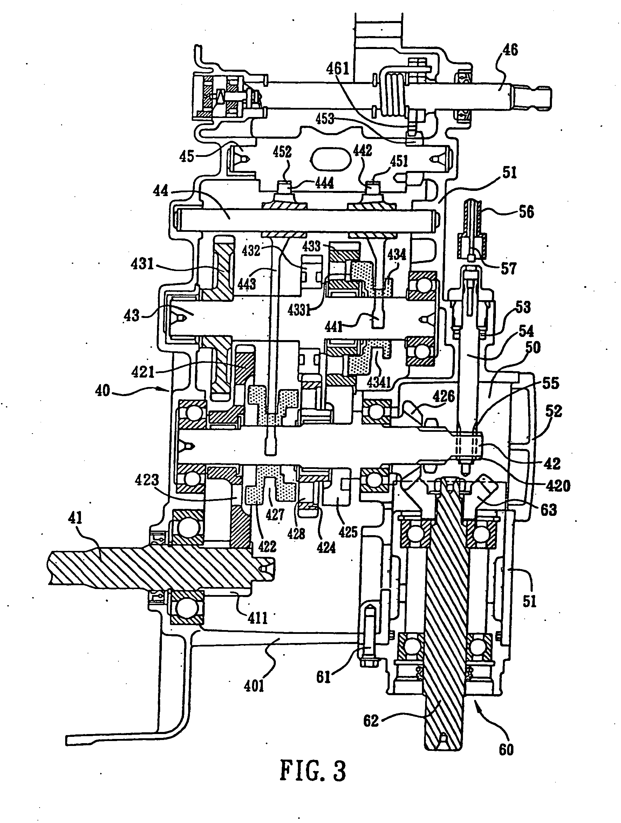

Referring to FIG. 3, a transmission gearbox **40** is shown comprising a box body **401** gearbox covered with a gearbox cover **51**, a driven shaft **41** rotatably mounted in the box body **401** for receiving driving power from an engine (not shown) through a belt transmission mechanism (not shown), a transmission gear **411** formed integral with the periphery of the driven shaft **41**, and a linking shaft **42** arranged in parallel to the driven shaft **41**. The linking shaft **42** has mounted thereon in proper order a reverse gear **421**, a second sliding block **422**, a low-range gear **424**, a forward gear **425**, and a drive bevel gear **426**. The reverse gear **421** is mounted on the linking shaft **42** and meshed with the transmission gear **411**. The reverse gear **421**, second sliding block **422** and the low-range gear **424** each have a coupling hole **423**, **427**, or **428**. The second sliding block **422** has a toothed portion (not shown) meshed with a toothed portion (not shown) of the linking shaft **42**. During rotation of the linking shaft **42**, the reverse gear **421** and the low-range gear **424** run idle.

A main shaft **43** is mounted in the box body **401** and arranged in parallel to the linking shaft **42** at one side opposite to the driven shaft **41**. The main shaft **43** has mounted thereon in proper order a transmission gear **431**, a low-range gear **432**, a forward gear **433**, and a first sliding block **434**. The transmission gear **431** is meshed with the transmission gear **411** at the driven shaft **41** (It is not visible from FIG. 3). The forward gear **433** and the first sliding block **434** each have a coupling hole **4331** or **4341**. The first sliding block **434** has a toothed portion (not shown) meshed with a toothed portion (not shown) of the main shaft **43.** The low-range gear **432** is meshed with the low-range gear **424** at the linking shaft **42**. The forward gear **433** is meshed with the forward gear **425** at the linking shaft **42**. During rotation of the main shaft **43**, the forward gear **433** runs idle.

A first push rod **441** and a second push rod **443** are respectively fastened to the coupling hole **4341** of the first sliding block **434** and the coupling hole **427** of the second sliding block **422**. The first push rod **441** and the second push rod **443** each have the other end terminating into a respective tip **442** or **444** that is respectively inserted into a respective sliding groove **451** or **452** at a gearshift hub **45** for moving a gearshift lever **46** into the desired gearshift position.

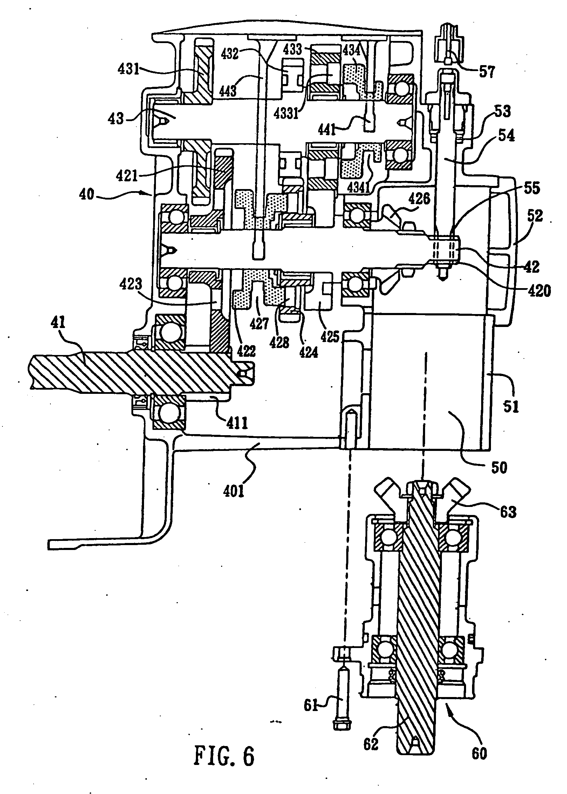

Referring to FIG. 6 and FIG. 3 again, the transmission gearbox **40** has a receiving chamber **50** around the drive bevel gear **426** at the linking shaft **42**. The receiving chamber **50** is directly formed in the gearbox cover **51** for quick installation of an output shaft set **60**. The output shaft set **60** is fastened to the gearbox cover **51** with a fastening member **61** (for example, screw). The output shaft **62** of the output shaft set **60** is mounted with a driven bevel gear **63**, which is meshed with the drive bevel gear **426** at the linking shaft **42**.

The gearbox cover **51** has a detachable lid **52** coaxial with the drive bevel gear **426** at the linking shaft **42**. By means *of detaching the detachable lid 52 disposed on the gearbox cover 51, a maintenance engineer is able to easily access to the space accommodating the driving bevel gear 426 at the l inking shaft 42 and the driven bevel gear 63 at the output shaft 62 for maintenance.*

The receiving chamber **50** is in communication with a mounting hole **53**, which accommodates an actuation rod **54**. The actuation rod **54** has mounted on one end thereof a worm gear **55** meshed with a toothed portion **420** at one end of the linking shaft **42**. Therefore, the linking shaft **42** can rotate the actuation rod **54**. The actuation rod **54** has the other end connected to a mileage counter in an instrument board (not shown) through a cable **56**. Therefore, during rotary motion of the actuation rod **54**, the core **57** of the cable **56** is synchronously rotated to drive the mileage counter to count the speed and mileage of the motor vehicle.

Referring to FIG. 3 again, a drive gear **461** is mounted on the gearshift lever **46** and meshed with a driven gear **453** at the gearshift hub **45.** When operating the gearshift lever **46** to move the gearshift hub **45** to the forward gearshift position, the first push rod **441** will move the first sliding block **434** into the coupling hole **4331** of the forward gear **433**, for enabling the engine driving force to be transferred from the transmission gear **411** at the driven shaft **41** to the transmission gear **431** at the main shaft **43** to rotate the main shaft **43.** At this time, the forward gear **433** will be changed from the idle-running status to the working status to rotate the forward gear **425,** the linking shaft **42,** the drive bevel gear **426,** the driven bevel gear **63** and the output shaft **62,** and to further rotate the rear wheels of the motor vehicle for forward movement (not shown).

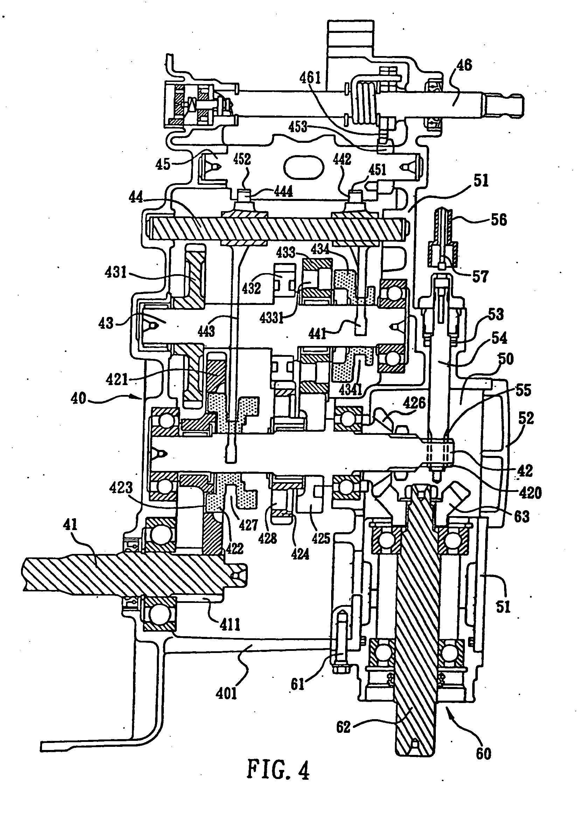

Referring to FIG. 4, when operating the gearshift lever **46** to move the gearshift hub **45** to the backward gearshift position, the second push rod **443** will move the second sliding block **422** into the coupling hole **423** of the reverse gear **421**, for enabling the engine driving force to be transferred from the transmission gear **411** at the driven shaft **41** to the linking shaft **42**. At this time, the reverse gear **421** will be changed from the idle-running status to the working status to rotate the linking shaft **42,** the drive bevel gear **426,** the driven bevel gear **63** and the output shaft **62**, and to further rotate the rear wheels of the motor vehicle for backward movement (not shown).

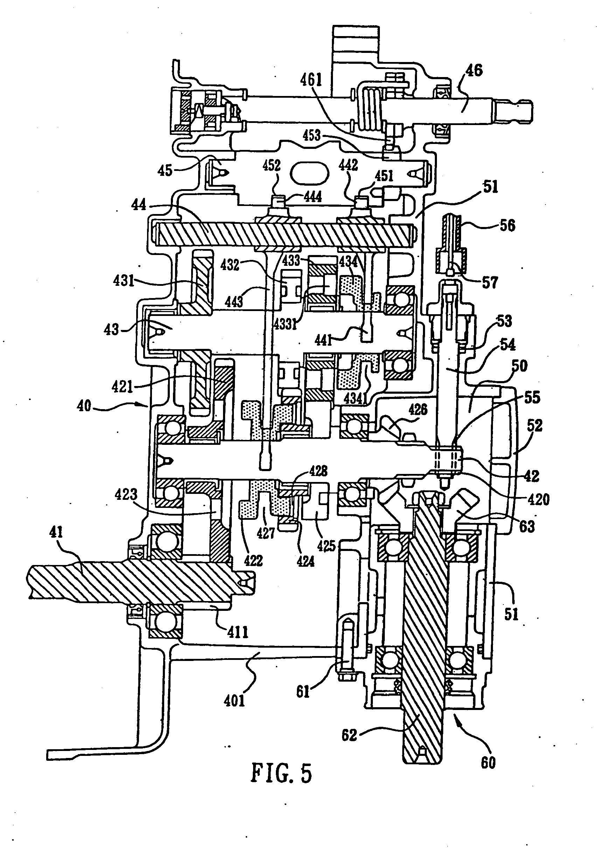

Referring to FIG. 5, when operating the gearshift lever **46** to move the gearshift hub **45** to the forward gearshift low-range position, the second push rod **443** will move the second sliding block **422** into the coupling hole **428** of the low-range gear **424**, for enabling the engine driving force to be transferred from the transmission gear **411** at the driven shaft **41** to the transmission gear **431** at the main shaft **43** to rotate the main shaft **43.** At this time, the low-range gear **432** at the main shaft **43** will drive the low-range gear **424** to rotate the linking shaft **42**, the drive bevel gear **426**, the driven bevel gear **63** and the output shaft **62**, and to further rotate the rear wheels of the motor vehicle for low-range (low speed) high-torque forward movement (not shown).

Therefore, by means of the operation of the transmission gear **431** at the main shaft **43**, the low-range gear **432**, the forward gear **433,** the first sliding block **434,** the reserve gear **421** at the linking shaft **42,** the second sliding block **422,** the low-range gear **424,** the forward gear **425** and the drive bevel gear **426**, the driven bevel gear **63** at the output shaft **62** can be controlled to mesh with the drive bevel gear **426** at the linking shaft **42**. This arrangement eliminates the noise problem due to inaccurate engagement between gears as encountered in the prior art design. Further, the gearbox cover **51** provides a receiving chamber **50** for quick installation of the output shaft set **60** to eliminate the complicated installation procedure of the prior art design. Further, the design of the detachable lid **52** of the gearbox cover **51** enables the maintenance engineer to access to the drive bevel gear **426** at the linking shaft **42** easily. Further, the gearbox **40** provides a mounting hole **53** to accommodate the actuation rod **54**, for enabling the cable **56** to drive the mileage counter to count the speed and mileage of the motor vehicle.

## Claims

1. A transmission gearbox (40) for use in a motor vehicle, comprising a box body (401) covered by a gearbox cover (51) and accommodating: a linking shaft (42), a main shaft (43), an output shaft set (60), and a driven shaft (41), wherein a driving bevel gear (426) is fixedly mounted on said linking shaft (42); a receiving chamber (50) within said transmission gearbox (40) is defined by said gearbox cover (51) and accommodating said driving bevel gear (426) and said output shaft set (60); said output shaft set (60) comprises an output shaft (62) and a driven bevel gear (63) fixedly mounted on said output shaft (62) and meshed with said driving bevel gear (426); said driven shaft (41) is adapted to be driven by an engine through a belt transmission mechanism and is able to transfer a driving force to said output shaft (62) through said linking shaft (42) and said main shaft (43); **characterized in that**:
said transmission gearbox (40) has a mounting hole (33) disposed at a position adjacent to said driven bevel gear (63) and said driving bevel gear (426) and being in communication with said receiving chamber (50) and accommodating an actuation rod (54); said actuation rod (54) has a first end and a second end; a worm gear (55) is fixedly mounted on said first end and meshed with a toothed portion (420) at one end of said linking shaft (42) adjacent to said driving bevel gear (426), said second end is adapted to be connected to an end of a cable (56) and to drive said end of said cable (56) and the other end of said cable (56) is adapted to be connected to a mileage counter disposed outside said transmission gearbox (40);
said output shaft set (60) is affixed to said box body (401) by a screw member (61) to form a space within said receiving chamber (50) and between said output shaft set (60) and said gearbox cover (51), said space accommodating said driven bevel gear (63), said driving bevel gear (426), said worm gear (55) and said toothed portion (420); and
a detachable lid (52) is disposed on said gearbox cover (51) at a position capable of accessing to said space when said detachable lid (52) is detached from the gearbox cover (51).

## Patentansprüche

1. Schaltgetriebegehäuse (40) für den Gebrauch in einem Kraftfahrzeug, das einen Schaltgetriebekörper (401) aufweist, der von einer Schaltgetriebeabdeckung (51) abgedeckt ist und Folgendes aufnimmt: eine Verbindungswelle (42), einer Hauptwelle (43), einen Ausgangswellensatz (60) und eine Abtriebswelle (41), wobei eine Antriebskegelradverzahnung (426) stationär auf der Verbindungswelle (42) montiert ist; wobei eine Aufnahmekammer (50) innerhalb des Schaltgetriebegehäuses (40) von der Schaltgetriebeabdeckung (51) definiert wird und die Antriebskegelradverzahnung (426) sowie den Ausgangswellensatz (60) aufnimmt, wobei der Ausgangswellensatz (60) eine Ausgangswelle (62) und eine Abtriebskegelradverzahnung (63) aufweist, die stationär auf die Ausgangswelle (62) montiert ist und in die Antriebskegelradverzahnung (426) eingreift; wobei die Abtriebswelle (41) angepasst ist, um von einem Motor über einen Riemenkraftübertragungsmechanismus angetrieben zu werden und fähig ist, eine Antriebskraft an die Ausgangswelle (62) über die Verbindungswelle (42) und die Hauptwelle (43) zu übertragen; **dadurch gekennzeichnet, dass**:
des Schaltgetriebegehäuse (40) eine Montagebohrung (53) hat, die in einer Position neben der Abtriebskegelradverzahnung (63) angeordnet ist und wobei die Antriebskegelradverzahnung (426) in Kommunikation mit der Aufnahmekammer (50) ist und eine Betätigungsstange (54) aufnimmt; wobei die Betätigungsstange (54) ein erstes Ende und ein zweites Ende hat, wobei ein Schneckengetriebe (55) stationär auf das erste Ende montiert ist und in einen Zahnabschnitt (420) an dem einen Ende der Verbindungswelle (42) neben der Antriebskegelradverzahnung (426) eingreift, wobei das zweite Ende angepasst ist, um mit einem Ende eines Kabels (56) verbunden zu werden und das Ende des Kabels (56) anzutreiben, und wobei das andere Ende des Kabels (56) angepasst ist, um mit einem Kilometerzähler verbunden zu werden, der außerhalb des Schaltgetriebegehäuses (40) angeordnet ist,
wobei der Ausgangswellensatz (60) an dem Schaltgetriebekörper (401) durch ein Schraubelement (61) befestigt ist, um einen Raum innerhalb der Aufnahmekammer (50) und zwischen dem Ausgangswellensatz (60) und der Schaltgetriebeabdeckung (51) zu bilden, wobei der Raum die Abtriebskegelradverzahnung (63), die Antriebskegelradverzahnung (426), das Schneckengetriebe (55) und den Zahnabschnitt (420) aufnimmt, und
wobei ein abnehmbarer Deckel (52) auf der Schaltgetriebeabdeckung (51) in einer Position angeordnet ist, in der Lage, auf den Raum zuzugreifen, wenn der abnehmbare Deckel (52) von der Schaltgetriebeabdeckung (51) gelöst wird.

## Revendications

1. Boîte de vitesses à transmission (40) à utiliser dans un véhicule à moteur comprenant un corps de boîtier (401) couvert par un couvercle de boîte de vitesses (51) et renfermant un arbre de liaison (42), un arbre principal (43), un jeu d'arbre de sortie (60) et un arbre entraîné (41), dans lequel un engrenage conique d'entraînement (426) est monté fixement sur ledit arbre de liaison (42) ; une chambre de réception (50) à l'intérieur de ladite boîte de vitesses à transmission (40) est défini par ledit couvercle de boîte de vitesses (51) et renfermant ledit engrenage conique d'entraînement (426) et ledit jeu d'arbre de sortie (60) ; ledit jeu d'arbre de sortie (60) comprend un arbre de sortie (62) et un engrenage conique entraîne (63) monté fixement sur ledit arbre de sortie (62) et engrené avec ledit engrenage conique d'entraînement (426) ; ledit arbre entraîné (41) est adapté afin d'être entraîné par un moteur et par l'intermédiaire d'un mécanisme de transmission à courroie et est en mesure de transférer une force d'entraînement audit arbre de sortie (62) par l'intermédiaire dudit arbre de liaison (42) et dudit arbre principal (43) ; **caractérisé en ce que** :
ladite boîte de vitesses à transmission (40) possède un trou de montage (53) disposé à une position adjacente audit engrenage conique entraîné (63) et audit engrenage conique d'entraînement (426) et étant en communication avec ladite chambre de réception (50) et refermant une tige d'actionnement (54) ; ladite tige d'actionnement (54) possède une première extrémité et une seconde extrémité ; un engrenage à vis sans fin (55) est monté fixement sur ladite première extrémité et engrené avec une portion dentée (420) à une extrémité dudit arbre de liaison (42) adjacente audit engrenage conique d'entraînement (426), ladite seconde extrémité est adaptée afin d'être connectée à une extrémité d'un câble (56) et d'entraîner ladite extrémité dudit câble (56) et l'autre extrémité dudit câble (56) est adaptée afin d'être raccordée à un compteur kilométrique disposé à l'extérieur de ladite boite de vitesses à transmission (40) ;
ledit arbre de sortie (60) est fixé audit corps de boîtier (401) par un élément de vis (61) afin de former un espace à l'intérieur de ladite chambre de réception (50) et entre ledit jeu d'arbre de sortie (60) et ledit couvercle de boîte de vitesses (51), ledit espace renfermant ledit engrenage conique entraîné (63), ledit engrenage conique d'entraînement (426), ledit engrenage de vis sans fin (55) et ladite portion dentée (420) ; et
un volet détachable (52) est disposé sur ledit couvercle de boîte de vitesses (51) à une position capable d'accéder audit espace quand ledit volet détachable (52) est détaché du couvercle de boîte de vitesses (51).
